Europäisches Patentamt

European Patent Office

Office européen des brevets

(11) Veröffentlichungsnummer: **0 181 638**
A2

# (12) EUROPÄISCHE PATENTANMELDUNG

(21) Anmeldenummer: 85114467.5

(22) Anmeldetag: 14.11.85

(51) Int. Cl.⁴: **G 02 B 27/22**

(30) Priorität: 15.11.84 DE 3441745

(43) Veröffentlichungstag der Anmeldung:
21.05.86 Patentblatt 86/21

(84) Benannte Vertragsstaaten:
AT BE CH DE FR GB IT LI LU NL SE

(71) Anmelder: Jos. Schneider Optische Werke Kreuznach
GmbH & Co. KG
Ringstrasse 132
D-6550 Bad Kreuznach(DE)

(72) Erfinder: Schröder, Wolfgang, Dipl.-Phys.
Ziegelhüttenstrasse 14
D-6556 Wöllstein(DE)

(74) Vertreter: Beckensträter, Friedrich Wilhelm, Dr.
Falkensteiner Strasse 23
D-6000 Frankfurt am Main 1(DE)

(54) Raumbild-Sichtgerät.

(57) Das beschriebene Raumbild-Sichtgerät bietet die Möglichkeit, räumliche Objekte, die durch ein Stereobildpaar wiedergegeben werden, als räumliche Bilder wahrzunehmen, ohne daß bei der Betrachtung optische Hilfsmittel in Augennähe angeordnet sein müssen. Hierzu ist zwischen den beiden Bildern (1a, 1b) des Stereobildpaares und zwei Austrittspupillen (11a, 11b) für die Augen eines Beobachters ein nach dem Grundprinzip eines Mikroskopes aufgebautes, optisches Abbildungssystem angeordnet, das aus zwei direkt vor den leuchtenden Bildern befindlichen Feldlinsen (2a, 2b), zwei Objektiven (5a, 5b), einer augenseitigen, positiven optischen Wirkungsgruppe (9, 10) und Spiegeln (3a, 3b, 4a, 4b, 8) zur Faltung der Strahlengänge besteht, die zwischen den Bildern (1a, 1b) und der optischen Wirkungsgruppe (9, 10) angeordnet sind. Mit einem solchen Sichtgerät lassen sich ungewöhnlich große Austrittspupillen (11a, 11b) erzielen, so daß der Beobachter sich relativ stark bewegen kann, ohne den Bildkontakt zu verlieren. Durch mehrfache Faltung der Strahlengänge wird ein kompakter Aufbau des Gerätes ermöglicht.

EP 0 181 638 A2

Fig. 1

- 1 -

## Raumbild-Sichtgerät

Die Erfindung bezieht sich auf ein Raumbild-Sichtgerät
für eine dreidimensionale Beobachtung von räumlichen
Objekten, die auf zwei Bildern aus verschiedener
Blickrichtung in Zentralprojektion abgebildet sind.

Raumbild-Sichtgeräte sind bisher in verschiedenen Ausführungsformen hauptsächlich zum Betrachten von Stereofotografien und für die Stereobildprojektion bekannt
geworden. Bei den Geräten zum Betrachten von Stereofotografien werden die beiden Bilder eines Stereobildpaares mit augennahen Linsen oder Spiegeln abgebildet.
Dabei sind zwei unterschiedliche Verfahren bekannt geworden. Beim Anaglyphenverfahren werden zwei getrennte
Wellenlängenbereiche mit entsprechenden Farbfiltern vor
den Augen genutzt. Beim Nimslo-Verfahren werden zwei
Teilbilder ineinander verschachtelt, die durch ein aufgepreßtes Raster von Zylinderlinsen betrachtet werden.

Für Vorträge, Vorlesungen und Kinovorführungen besteht
die Möglichkeit, Raumbilder zu projizieren. Dies geschieht entweder mit speziellen Stereo-Diaprojektoren
oder Stereo-Overheadprojektoren oder auch mit einer
Kombination von zwei Flachbild-Diaprojektoren. Die
Bildtrennung bewirken dabei Polarisationsfilter vor
den Projektorobjektiven und Polarisationsbrillen, die die Zuschauer aufsetzen müssen. Das erwähnte Anaglyphenverfahren wird ebenfalls für die Stereo-Projektion benutzt.

Es ist ferner ein Raumbild-Sichtgerät bekannt geworden,
bei dem ein elastischer Hohlspiegel derart in Schwingungen versetzt wird, daß sein Kugelradius periodisch
kleine Änderungen durchläuft. Phasenrichtig auf den
Hohlspiegel projizierte Bilder, die verschiedene
Schichten eines räumlichen Objekts wiedergeben, können
von dem Beobachter zu einem stereoskopischen Bild verschmolzen werden. Das Gerät ist bisher jedoch nur für
eine Tiefe des räumlich abzubildenden Objekts von etwa
30 cm geeignet.

Es wurden auch große Anstrengungen unternommen, um ein
Stereofernsehen zu realisieren. Bisher sind hierzu jedoch noch keine Geräte bekannt geworden, die ohne optische Hilfsmittel in Augennähe auskommen.

Der Erfindung liegt die Aufgabe zugrunde, ein Raumbild-
Sichtgerät für eine räumliche Wahrnehmung von Objekten,
die durch ein Stereobildpaar wiedergegeben werden, zu
schaffen, bei dem keine optischen Hilfsmittel in Augennähe erforderlich sind.

Diese Aufgabe wird erfindungsgemäß dadurch gelöst, daß zwischen den beiden Bildern und zwei Austrittspupillen für die Augen eines Beobachters ein nach dem Grundprinzip eines Mikroskopes aufgebautes, optisches Abbildungssystem angeordnet ist, das aus zwei direkt vor den leuchtenden Bildern befindlichen Feldlinsen, zwei Objektiven, einer augenseitigen, positiven optischen Wirkungsgruppe und zwischen den Bildern und der augenseitigen, positiven optischen Wirkungsgruppe angeordneten Spiegeln zur Faltung der Strahlengänge besteht. Unter dem Grundprinzip eines Mikroskopes wird dabei die Abbildung eines in endlicher Entfernung befindlichen Objektes, den beiden Bildern eines Stereobildpaares, in ein reelles Zwischenbild verstanden, das mit Hilfe eines Okulars nach unendlich abgebildet wird, so daß ein Beobachter das Zwischenbild akkommodationsfrei betrachten kann. Das erfindungsgemäße Raumbild-Sichtgerät unterscheidet sich von einem Mikroskop im wesentlichen dadurch, daß das Objekt bzw. die Objekte bei der ersten Teilabbildung in ein reelles Zwischenbild nicht stark vergrößert, sondern eventuell sogar verkleinert wird und daß für beide Augen zusammen nur eine einem Okular entsprechende positive optische Wirkungsgruppe verwendet wird.

Das erfindungsgemäße Raumbild-Sichtgerät bietet einem Beobachter, der mit beiden Augen auf die letzte, optisch wirksame Fläche des Gerätes blickt, die Möglichkeit, ein durch ein Stereobildpaar wiedergegebenes, räumliches Objekt dreidimensional wahrzunehmen. Die räumliche Tiefe der Wahrnehmung, die mehrfarbig und in Bewegung sein kann, ist nur von der Tiefenschärfe der beiden Bilder des Stereobildpaares abhängig.

Das erfindungsgemäße Raumbild-Sichtgerät zeichnet sich durch zahlreiche Vorteile aus. So ermöglicht das erfindungsgemäße Raumbild-Sichtgerät einen relativ großen Betrachtungsabstand und ungewöhnlich große Austrittspupillen, so daß der Beobachter seine Augenposition und seine Distanz zum Gerät relativ stark variieren kann, ohne den Bildkontakt zu verlieren. Als ein weiterer Vorteil ist der besonders in horizontaler Richtung große Gesichtsfeldwinkel sowie die Möglichkeit, akkommodationsfrei beobachten zu können, anzusehen. Mit dem erfindungsgemäßen Raumbild-Sichtgerät wird ferner eine ausgezeichnete Bildqualität erreicht, die bei sorgfältiger Ausbildung der optischen Baugruppen nur von der Qualität der primären Bilder des Stereobildpaares begrenzt wird. Das erfindungsgemäße Raumsichtgerät eignet sich auch für Stereo-Farbfernsehbildpaare und für ruhende oder zeitlich veränderliche computergesteuerte Bildpaare. Dabei ist insbesondere der geringe Energiebedarf für die Fernsehröhren oder die computergesteuerten Grafikbildschirme von Vorteil, der dadurch erzielt wird, daß das Licht den Augen gezielt zugeführt wird.

Vorteilhafte Weiterbildungen und Ausgestaltungen der Erfindung sind in den Unteransprüchen 2 bis 15 angegeben.

Weitere Merkmale, Einzelheiten und Vorteile der Erfindung ergeben sich aus der nachfolgenden Beschreibung einiger bevorzugter Ausführungsbeispiele, die in der Zeichnung dargestellt sind. Es zeigen

Fig. 1 einen schematischen Horizontalschnitt eines erfindungsgemäßen Raumbild-Sichtgerätes mit den beiden getrennten, sich teilweise überdeckenden Strahlengängen für beide Beobachteraugen im Maßstab 1:5,

Fig. 2 einen schematischen Vertikalschnitt durch das Raumbild-Sichtgerät mit senkrechter Projektion der außerhalb der Schnittebene verlaufenden, bündelbegrenzenden Strahlen auf die Schnittebene,

Fig. 3 einen schematischen Horizontalschnitt durch eine weitere Ausgestaltung eines erfindungsgemäßen Raumbild-Sichtgerätes mit anderen Faltungen der Strahlengänge im Maßstab 1:5,

Fig. 4 einen schematischen Vertikalschnitt durch das Raumbild-Sichtgerät gemäß Fig. 3 mit senkrechter Projektion der außerhalb der Schnittebene verlaufenden, bündelbegrenzenden Strahlen auf die Schnittebene,

Fig. 5 einen Horizontalschnitt der Abwicklung eines erfindungsgemäßen Raumbild-Sichtgerätes im Maßstab 1:6,

Fig. 6 einen Längsschnitt durch eine Feldlinse und eine Objektivbaugruppe eines erfindungsgemäßen Raumbild-Sichtgerätes mit abgewickeltem Strahlengang im Maßstab 0,5:1 und

Fig. 7 einen Längsschnitt durch die augenseitige Linsenbaugruppe der positiven optischen Wirkungsgruppe eines erfindungsgemäßen Raumbild-Sichtgerätes im Maßstab 1:1.

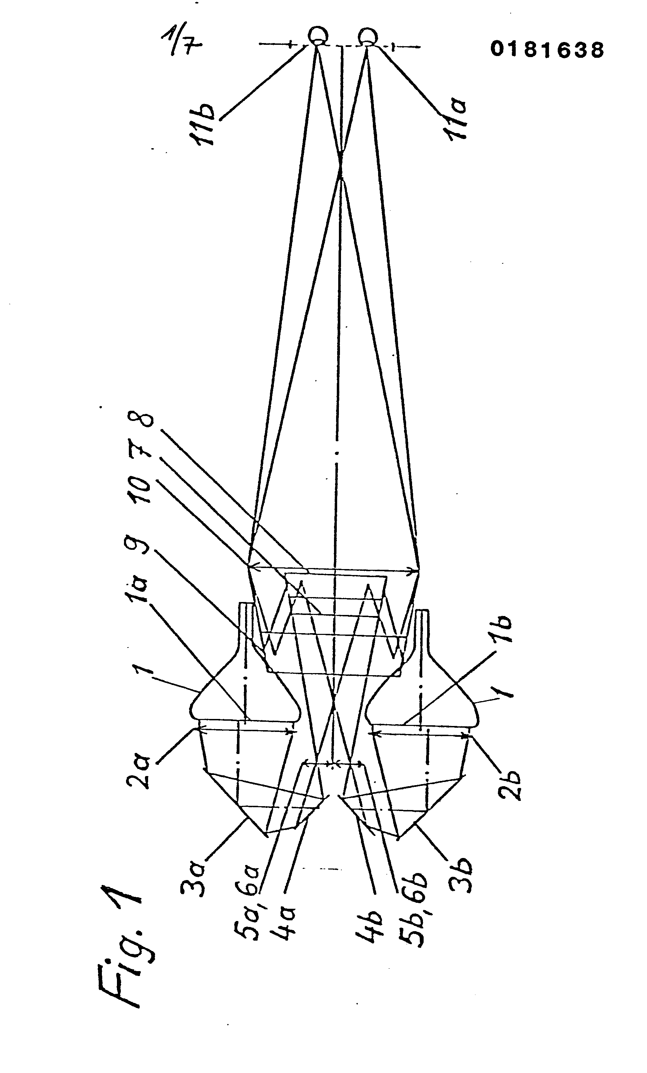

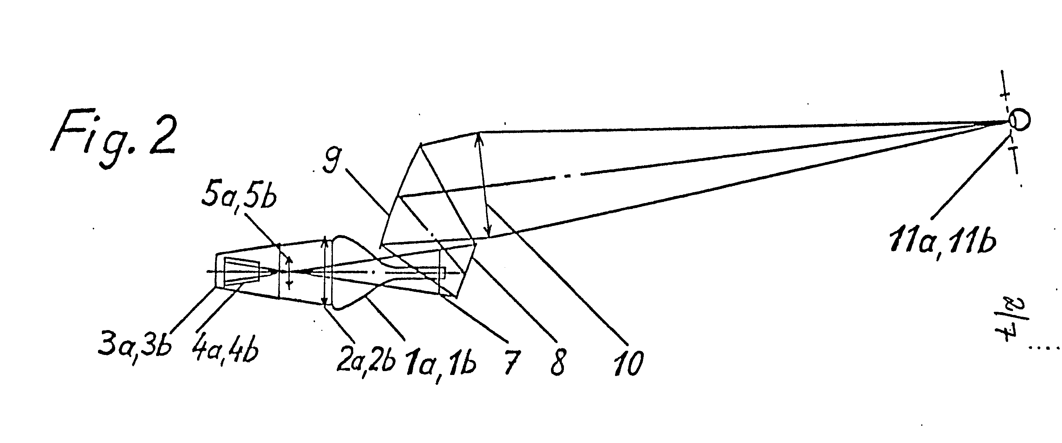

Das in den Fig. 1 und 2 dargestellte Raumbild-Sichtgerät ist bezogen auf seine vertikale Mittelebene symmetrisch aufgebaut. Zur Erzeugung eines Stereobildpaares weist das dargestellte Gerät zwei parallel nebeneinander angeordnete Fernsehbildröhren 1 auf, auf deren Bildschirmen die beiden Teilbilder 1a, 1b des Stereobildpaares erzeugt werden. Das von jedem Teilbild 1a, 1b

- 7 -

ausgesendete Licht wird mit Hilfe von Feldlinsen 2a, 2b, die sich vor den Bildschirmen befinden, gebündelt und jeweils über zwei ebene Faltungsspiegel 3a, 4a bzw. 3b, 4b derart auf jeweils ein Abbildungsobjektiv 5a, 5b gelenkt, daß in endlicher Entfernung hinter jedem Abbildungsobjektiv 5a, 5b ein reelles, aufrechtes und seitenrichtiges Zwischenbild entsteht. Die Abbildungsobjektive 5a, 5b liegen unmittelbar nebeneinander in einer mit den beiden Fernsehbildröhren gemeinsamen horizontalen Ebene. Die Abbildungsobjektive 5a, 5b sind mit Fassungsberandungen 6a, 6b versehen, die als Aperturblenden wirken.

Von den beiden vor den beiden Fernseh-Bildschirmen liegenden Abbildungsobjektiven 5a, 5b gelangt das Licht durch einen Zwischenraum zwischen den Fernsehbildröhren 1 zur Zwischenbildebene 7, die so weit hinter den Bildschirmen liegt, daß genügend Raum zur Ausbildung der Zwischenbilder zur Verfügung steht. Die beiden in der Luft in der Zwischenbildebene 7 entstehenden Zwischenbilder des Stereobildpaares überdecken sich teilweise, wobei im Überdeckungsbereich beide Zwischenbilder nicht unbedingt am gleichen Ort das gleiche Objektdetail zeigen müssen.

Die Abbildungsstrahlen der Zwischenbilder werden von einem ebenen Spiegel 8 auf einen oberhalb der Fernsehbildröhren 1 angeordneten Hohlspiegel 9 und von dort über eine Linsenbaugruppe 10 zu den Austrittspupillen 11a, 11b gelenkt. Der Hohlspiegel 9 und die Linsenbaugruppe 10 bilden zusammen eine positive optische Wirkungsgruppe, mit der ein Beobachter die beiden Zwischenbilder akkommodationsfrei beobachten kann. Aufgrund der Fähigkeit des menschlichen Gehirns, die von beiden Augen aufgenommenen Bilder einander zuzuordnen, wird beim Beobachten der beiden gegeneinander versetzten Zwischenbilder der Eindruck der Wahrnehmung eines räumlichen Objektes hervorgerufen. Die Zuordnungsfähigkeit des menschlichen Gehirns erlaubt auch seitliche Verschiebung der beiden Zwischenbilder in horizontäler Richtung aufeinander zu oder voneinander weg in gewissen Grenzen, so daß das Höhen-Breitenverhältnis der räumlichen Wahrnehmung durch die Aufnahmebedingungen bei der Anfertigung eines Stereobildpaares festgelegt werden kann. Diese Aufnahmebedingungen dürfen auch zeitweiligen Änderungen unterliegen, wobei diese Änderungen aber nicht sehr groß sein dürfen, um die Anpassungsfähigkeit des Beobachters nicht zu überfordern. Im Ergebnis ist somit die Breite eines Bildes, das mit dem Raumbild-Sichtgerät betrachtet werden kann, von den Aufnahmebedingungen abhängig und auf Wunsch veränderlich, ohne daß eine Änderung an dem beschriebenen Raumbild-Sichtgerät vorgenommen wird.

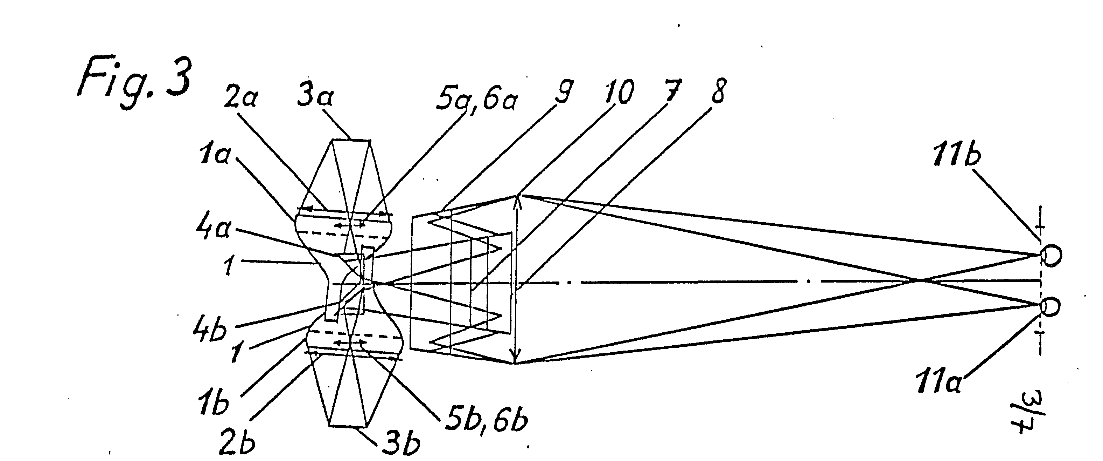

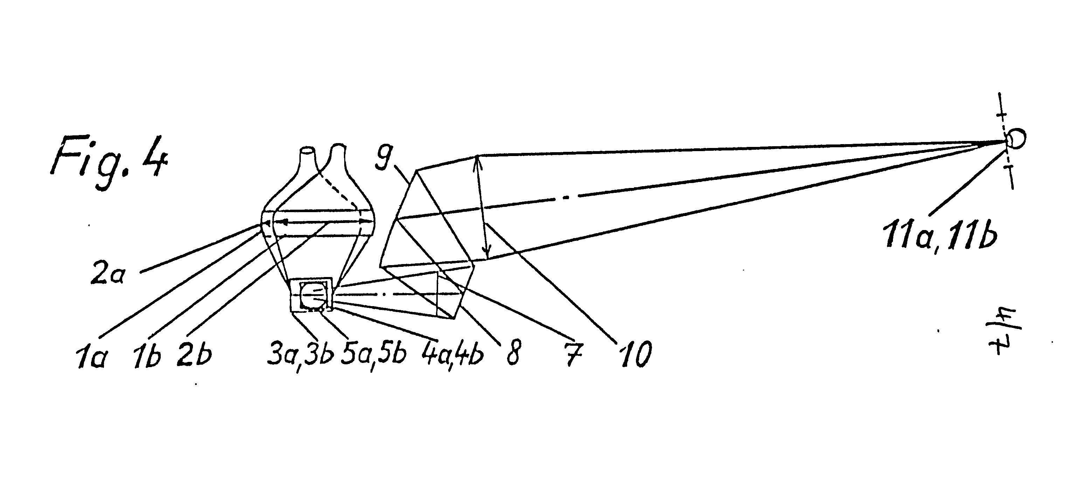

Das in den Fig. 3 und 4 dargestellte Raumbild-Sichtgerät stimmt in seinem grundsätzlichen Aufbau mit
dem Raumbild-Sichtgerät gemäß den Fig. 1 und 2 überein. Es wurden daher für die einzelnen Bauelemente
die gleichen Bezugszeichen verwendet. Das Raumbild-
Sichtgerät gemäß den Fig. 3 und 4 zeichnet sich
durch eine geringere Baulänge aus. Dies wird durch
eine Anordnung der Fernsehbildröhren 1 mit voneinander abgekehrten Bildschirmen erreicht. Dabei wird
das von den Bildschirmen ausgesendete Licht von den
Faltungsspiegeln 3a, 3b in die unterhalb der Fernsehbildröhren 1 im Abstand voneinander in einer gemeinsamen Achse liegenden Abbildungsobjektive 5a,
5b gelenkt, und das aus den Abbildungsobjektiven
5a, 5b austretende Licht wird von den zwischen den
Abbildungsobjektiven 5a, 5b liegenden Faltungsspiegeln 4a, 4b in Richtung der Zwischenbildebene
7 und des dahinterliegenden Spiegels 8 reflektiert.
Von dem Spiegel 8 gelangt das Licht in gleicher Weise
wie bei dem Raumbild-Sichtgerät gemäß den Fig. 1 und
2 über einen Hohlspiegel 9 und eine Linsenbaugruppe
10 zu den Austrittspupillen 11a, 11b.

Die primären Teilbilder 1a, 1b des Stereobildpaares
werden bei dem in Fig. 1 und 2 gezeigten Ausführungsbeispiel mit einem Abbildungsmaßstab $\beta'_2 = -0,6667$,
also 1,5 - mal verkleinert, in der Zwischenbildebene 7 abgebildet. Dieser Abbildungsmaßstab ist willkürlich gewählt worden und kann beliebigen Bildschirmabmessungen angepaßt werden. Die Bildschirmgröße, die bei dem dargestellten Raumbild-Sichtgerät gewählt wurde, stellt einen Kompromiß in Bezug auf die Herstellbarkeit des Bildschirmes und die Kompaktheit des erfindungsgemäßen Raumbild-Sichtgerätes dar. Wenn kleinere Bildschirme gebaut werden können, läßt sich das Raumbild-Sichtgerät noch kompakter bauen. Müssen größere Bildschirme verwendet werden, wird das Raumbild-Sichtgerät entsprechend voluminöser.

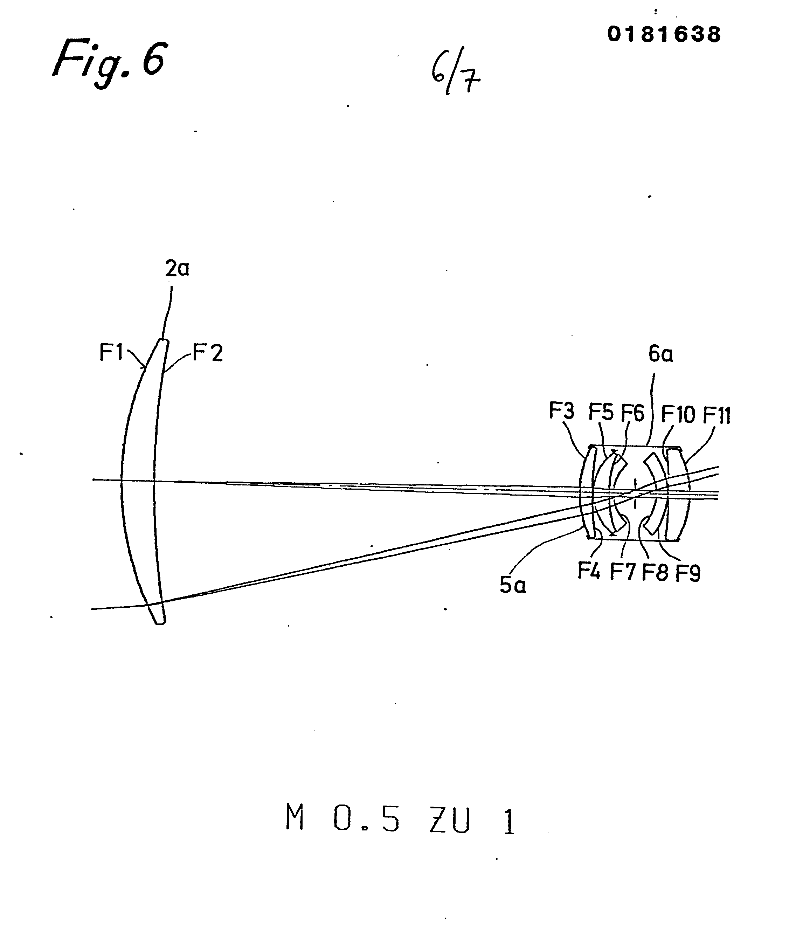

Um eine hohe Abbildungsqualität zu erreichen, wird bei dem in Fig. 1 und 2 gezeigten Raumbild-Sichtgerät jeweils ein fünflinsiges, unsymmetrisches Doppel-Gaus-Objektiv 5a bzw. 5b verwendet, das so korrigiert ist, daß die Wirkung der Feldlinse 2a bzw. 2b auf die Bildfeldwölbung kompensiert wird. Die Feldlinsen 2a, 2b sind als optimal durchgebogene, sammelnde Einzellinsen ausgebildet. Eine aus Feldlinse 2a und Objektiv 5a bestehende Objektivbaugruppe ist in Fig. 6 im Schnitt dargestellt. Ihre optischen Daten sind am Schluß der Beschreibung in der Tabelle 1 aufgeführt. Die beiden Abbildungsobjektive 5a, 5b haben jeweils eine Brennweite von $f_2 = 96$ mm mit einer Blendenkennzahl $k = 2,4$, das heißt, daß die Eintrittspupillen der Abbildungsobjektive 5a, 5b, die im wesentlichen durch ihre Fassungsberandungen 6a, 6b gegeben sind, einen Durchmesser d2 = 40 mm haben.

Weil die Fassungsberandungen 6a, 6b der beiden Abbildungsobjektive 5a, 5b mit Hilfe der in den Strahlengängen auf die Zwischenbildebene 7 folgenden augenseitigen, positiven optischen Wirkungsgruppe 9, 10 in die Ebene der Beobachteraugen als Austrittspupillen 11a, 11b etwa mit dem Abbildungsmaßstab $\beta'_3 = -1,5$ abgebildet werden, ist der Abstand der beiden benachbarten Abbildungsobjektive 5a, 5b unter Berücksichtigung ihrer Durchmesser so klein wie möglich gewählt worden. Auf diese Weise wurde ein Abstand der beiden Austrittspupillen 11a, 11b von etwa 60 mm erreicht, wobei der Durchmesser der Austrittspupillen 11a, 11b ebenfalls etwa 60 mm beträgt. Diese ungewöhnliche Größe der Austrittspupillen 11a, 11b bietet dem Beobachter die Möglichkeit, seine Augenposition innerhalb der im Durchmesser 60 mm großen Kreise zu verändern und auch die Distanz zum Raumbild-Sichtgerät relativ stark zu variieren, ohne dabei den Bildkontakt zu verlieren.

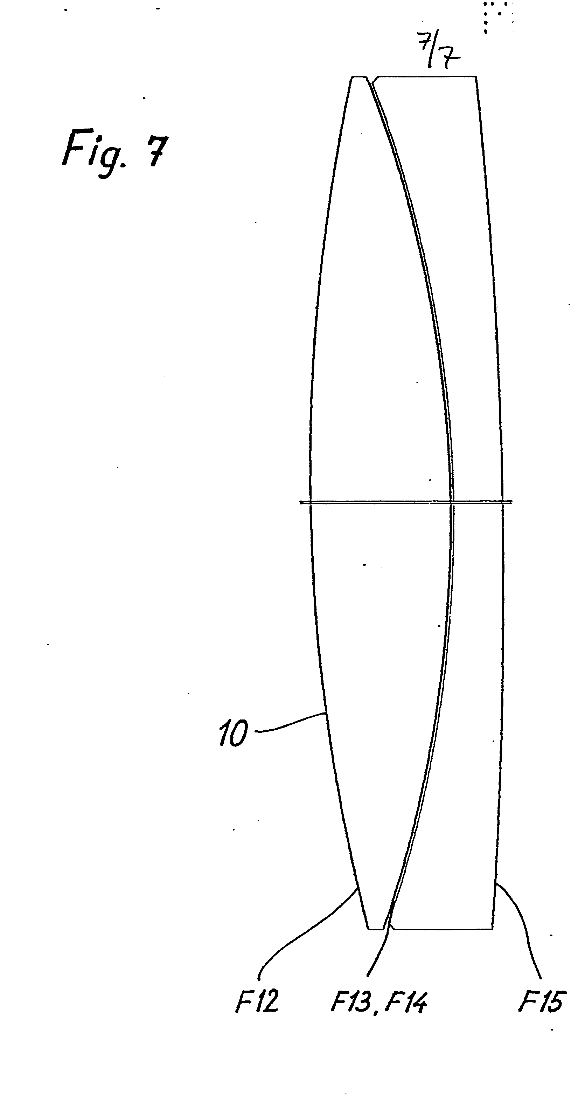

Bei der augenseitigen, positiven optischen Wirkungsgruppe des Raumbild-Sichtgerätes gemäß Fig. 1 und 2 hat der Hohlspiegel 9 einen Spiegelradius von $r_{sp}$ = 620 mm, so daß die Spiegelbrennweite $f_{sp}$ = 310 mm beträgt. Die Linsenbaugruppe 10 besteht aus einem zweilinsigen Achromaten mit einer Gesamtbrennweite $f_{ach}$ = 720 mm und einer Blendenzahl k = 3,6. Die optischen Daten der Linsenbaugruppe 10 sind in der Tabelle 2 angegeben. Fig. 7 zeigt die Linsenbaugruppe 10 im Längsschnitt. Der Abstand zwischen dem Hohlspiegel 9 und der Linsenbaugruppe 10 beträgt 100 mm. Die Gesamtbrennweite der Kombination aus dem Hohlspiegel 9 und der Linsenbaugruppe 10 hat den Wert $f_3$ = 240 mm. Die Linsenbaugruppe 10 kann aus Glas- oder Kunststofflinsen aufgebaut sein.

Der objektseitige Brennpunkt der durch den Hohlspiegel 9 und die Linsenbaugruppe 10 gebildeten optischen Wirkungsgruppe ist in der Zwischenbildebene 7 angeordnet. Hierdurch gelangen die Abbildungsstrahlenbündel von der Linsenbaugruppe kommend als afokale Strahlenbündel in die Beobachteraugen und ermöglichen ein akkommodationsfreies Sehen.

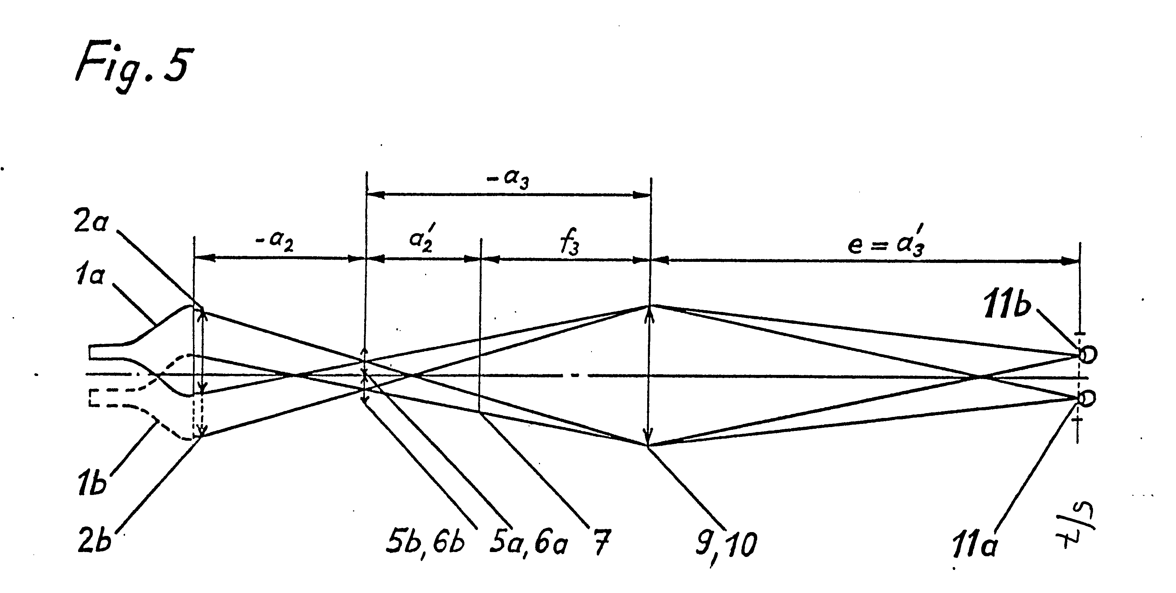

Die Wirkungsweise des erfindungsgemäßen Raumbild-Sichtgerätes und die gegenseitige Abhängigkeit seiner optischen Daten wird an Hand der in Fig. 5 gezeigten Abwicklung näher erläutert. In der Abwicklung überdecken sich die primären Teilbilder 1a, 1b des Stereobildpaares und machen damit die Notwendigkeit einer Faltung der Strahlengänge deutlich. Die Feldlinsen 2a, 2b sind in unmittelbarer Nähe der primären Teilbilder 1a, 1b angeordnet und ihre Brennweite $f_1$ ist ungefähr
gleich dem Abstand zwischen den Teilbildern 1a, 1b
und den Abbildungsobjektiven 5a, 5b. Die augenseitige,
positive optische Wirkungsgruppe 9, 10 ist in Fig. 5
aus Vereinfachungsgründen durch eine einzelne sammelnde
Brechkraft mit einer Brennweite $f_3$ ersetzt worden.

Wesentlich für die Funktion des erfindungsgemäßen Raumbild-Sichtgerätes ist die in Fig. 5 dargestellte Verkettung des Blenden- und Abbildungsstrahlenganges für
jedes Beobachterauge. Hieraus ergeben sich einige zwangsläufige Größenverhältnisse wie im Folgenden näher dargestellt wird.

Die Größe der Brennweite $f_3$ folgt zwangsläufig aus der
Festlegung des Abbildungsmaßstabes, mit dem die Objektivfassungsberandungen 6a, 6b in die Austrittspupillen 11a, 11b abgebildet werden sollen. Mit der
Brennweite $f_3$ liegt auch die Zwischenbildebene 7 fest,
damit die Forderung nach akkommodationsfreiem Sehen
erfüllt wird. Weiterhin folgt hieraus die Festlegung
des Abbildungsmaßstabes, mit dem die Teilbilder 1a,
1b in die Zwischenbildebene abgebildet werden.

Weiterer Ausgangspunkt bei der Festlegung der Abmessungen des erfindungsgemäßen Raumbild-Sichtgerätes
sind die angestrebten großen Durchmesser der Austrittspupillen 11a, 11b in einer Größe von etwa 60 mm. Durch den Augenabstand eines Beobachters, der im Durchschnitt ebenfalls etwa 60 mm beträgt, können so die beiden Austrittspupillen direkt nebeneinander angeordnet werden. Um die Abbildungsobjektive 5a, 5b klein halten zu können, wird der Abbildungsmaßstab der augenseitigen, positiven optischen Wirkungsgruppe 9, 10 im Blendenstrahlengang beispielsweise auf etwa $\beta'_3 = - 1,5$ festgelegt. Für die Abbildungsobjektive 5a, 5b ergibt sich damit ein freier Durchmesser $d_{2a} = d_{2b} = 40$ mm.

Der Abstand e zwischen der augenseitigen, positiven optischen Wirkungsgruppe 9, 10 und den Beobachteraugen kann relativ willkürlich festgelegt werden. Bei einem zu großen Wert von e wird der Gesichtsfeldwinkel unnötig klein, und bei einem zu kleinen Wert von e wird die Brennweite der augenseitigen, positiven optischen Wirkungsgruppe 9, 10 zu kurz und führt dann zu Problemen bei der Realisierung des Öffnungsverhältnisses der augenseitigen, positiven optischen Wirkungsgruppe 9, 10. Unter Berücksichtigung dieser beiden Gesichtspunkte wurde als Kompromiß e = 600 mm festgelegt.

Bei dem beispielhaft festgelegten Augenabstand e = $a'_3 = 600$ mm ergibt sich zusammen mit dem zuvor festgelegten Abbildungsmaßstab $\beta'_3 = - 1,5$ zwangsläufig ein bestimmter Wert für die Brennweite der augenseitigen, positiven optischen Wirkungsgruppe 9, 10
über die Beziehung:

$$\beta'_3 = \frac{a'_3}{a_3} \qquad (1)$$

mit $\quad a'_3 = e \qquad (2)$

und $\quad a_3 = - a'_2 - f_3 \qquad (3)$

zu $\quad f_3 = -\frac{e}{\beta'_3} - a'_2 \qquad (4)$

Das Einsetzen von Zahlenwerten führt zu:

$$f_3 = \frac{-600}{-1,5} - 160 = 240 \text{ mm}$$

Aufgrund des festgelegten Abbildungsmaßstabes $\beta'_3$ ergibt
sich:

$$a_3 = \frac{a'_3}{\beta'_3} \qquad (1')$$

und $\quad a_3 = \frac{600}{-1,5} = -400 \text{ mm}$

Aus Fig. 6 folgt damit für die Bildweiten $a'_2$ der Abbildungsobjektive 5a und 5b:

$$a'_2 = - a_3 - f_3 = 160 \text{ mm} \qquad (5)$$

Der Größe der primären Teilbilder 1a und 1b entsprechend ergibt sich der Abbildungsmaßstab der Abbildungsobjektive 5a und 5b:

$$\beta'_2 = \frac{a'_2}{a_2} \qquad (6)$$

bzw. $\qquad a_2 = \frac{a'_2}{\beta'_2} \qquad (7)$

$$a_2 = \frac{400 \text{ mm}}{-\frac{2}{3}}$$

$$a_2 = -240 \text{ mm}$$

Das erfindungsgemäße Raumbild-Sichtgerät ist für zahlreiche Anwendungen geeignet. Es kann als Computer-Ausgabegerät für Forschungstätigkeit und für Unterhaltung verwendet werden. Weiterhin ist mit dem erfindungsgemäßen Raumbild-Sichtgerät Stereofernsehen und die Wiedergabe von Stereo-Videokassetten möglich. Ebenso lassen sich mit dem erfindungsgemäßen Gerät Echtzeit-Video-Kontrollbeobachtungen von unzugänglichen Gebieten oder aus gepanzerten Fahrzeugen heraus durchführen.

Tabelle I
---

optische Daten der Objektivbaugruppe 2a, 5a bzw. 2b, 5b

| Flächennummer | Radien (mm) | Dicken (mm) | Gläser $n_e$ | $v_e$ |
|---|---|---|---|---|
| F 1 | 140,00 | | | |
| F 2 | 370,00 | 15,00 | 1,518722 | 63,96 |
| F 3 | 45,28 | 200,00 | Luft | |
| F 4 | 116,45 | 6,10 | 1,694013 | 54,48 |
| F 5 | 23,62 | 0,57 | Luft | |
| F 6 | 45,78 | 7,43 | 1,669995 | 48,13 |
| F 7 | 18,13 | 2,29 | 1,734299 | 28,47 |
| F 8 | -21,66 | 20,58 | Luft | |
| F 9 | -30,88 | 5,34 | 1,791799 | 25,87 |
| F 10 | -178,06 | 0,57 | Luft | |
| F 11 | -41,76 | 9,91 | 1,694013 | 54,48 |

Tabelle II
---

optische Daten der Linsenbaugruppe 10 (Achromat)

| Flächennummer | Radien (mm) | Dicken (mm) | Gläser $n_e$ | $v_e$ |
|---|---|---|---|---|
| F 12 | 433,6 | | | |
| F 13 | -283,0 | 33,0 | 1,51872 | 63,96 |
| F 14 | -283,0 | 0,7 | Luft | |
| F 15 | -1113,0 | 12,0 | 1,62058 | 36,37 |

Patentansprüche:

1. Raumbild-Sichtgerät für die dreidimensionale Beobachtung von räumlichen Objekten, die auf zwei Bildern aus verschiedenen Blickrichtungen in Zentralprojektion abgebildet sind, d a d u r c h   g e k e n n z e i c h n e t , daß zwischen den beiden Bildern (1a, 1b) und zwei Austrittspupillen (11a, 11b) für die Augen eines Beobachters ein nach dem Grundprinzip eines Mikroskopes aufgebautes, optisches Abbildungssystem angeordnet ist, das aus zwei direkt vor den leuchtenden Bildern (1a, 1b) befindlichen Feldlinsen (2a, 2b), zwei Objektiven (5a, 5b), einer augenseitigen, positiven optischen Wirkungsgruppe (9, 10) und zwischen den Bildern (1a, 1b) und der augenseitigen, positiven optischen Wirkungsgruppe (9,10) angeordneten Spiegeln (3a, 3b, 4a, 4b, 8) zur Faltung der Strahlengänge besteht.

2. Raumbild-Sichtgerät nach Anspruch 1, dadurch gekennzeichnet, daß die beiden Austrittspupillen (11a, 11b) des optischen Abbildungssystems an der Stelle der Beobachteraugen relativ weit hinter der augenseitigen, positiven optischen Wirkungsgruppe (9, 10) liegen und ihr horizontaler Abstand und ihre Durchmesser etwa der Größe des Augenabstands eines Be-

- 2 -

obachters entsprechen.

3. Raumbild-Sichtgerät nach Anspruch 1 oder 2, dadurch gekennzeichnet, daß die Bilder (1a, 1b) normale Seitenorientierung haben (d.h. nicht seitenvertauscht sind).

4. Raumbild-Sichtgerät nach einem der Ansprüche 1 bis 3, dadurch gekennzeichnet, daß die beiden Bilder (1a, 1b) mit Fernsehempfangsröhren erzeugt werden.

5. Raumbild-Sichtgerät nach einem der Ansprüche 1 bis 3, dadurch gekennzeichnet, daß die beiden Bilder (1a, 1b) mit computerangesteuerten, grafischen Bildschirmen erzeugt werden.

6. Raumbild-Sichtgerät nach einem der Ansprüche 1 bis 3, dadurch gekennzeichnet, daß die beiden Bilder (1a, 1b) durchstrahlbare Diapositive sind.

7. Raumbild-Sichtgerät nach einem vorhergehenen Anspruch, dadurch gekennzeichnet, daß die Faltungsspiegel (3a, 3b, 4a, 4b und 8) Planspiegel sind.

8. Raumbild-Sichtgerät nach einem vorhergehenden Anspruch, dadurch gekennzeichnet, daß die Objektive (5a und 5b) mehrlinsige optische Systeme vom Doppel-Gauß-Typ sind.

9. Raumbild-Sichtgerät nach einem der Ansprüche 1 bis 8, dadurch gekennzeichnet, daß die Fassungen der Objektive (5a, 5b) als Aperturblenden (6a, 6b) wirken.

10. Raumbild-Sichtgerät nach einem vorhergehenden Anspruch, dadurch gekennzeichnet, daß die zwischen den Objektiven (5a, 5b) und der augenseitigen, positiven optischen Wirkungsgruppe (9, 10) in einer Zwischenbildebene (7) befindlichen, reellen Zwischenbilder von der augenseitigen, positiven optischen Wirkungsgruppe (9, 10) so in die Beobachteraugen abgebildet werden, daß diese nicht akkommodieren müssen.

11. Raumbild-Sichtgerät nach einem vorhergehenden Anspruch, dadurch gekennzeichnet, daß der horizontale Durchmesser der augenseitigen, positiven optischen Wirkungsgruppe (9, 10) größer als ihr vertikaler Durchmesser ist.

12. Raumbild-Sichtgerät nach einem vorhergehenden Anspruch, dadurch gekennzeichnet, daß der erste Teil (9) der augenseitigen, positiven optischen Wirkungsgruppe (9, 10) ein sphärischer Hohlspiegel ist.

13. Raumbild-Sichtgerät nach einem der Ansprüche 1 bis 12, dadurch gekennzeichnet, daß der erste Teil (9) der augenseitigen, positiven optischen Wirkungsgruppe

0181638

− 4 −

(9, 10) als asphärischer Hohlspiegel ausgebildet
ist.

14. Raumbild-Sichtgerät nach Anspruch 13, dadurch gekennzeichnet, daß der asphärische Hohlspiegel als
außeraxiale Teilfläche eines Paraboloids ausgebildet ist.

15. Raumbild-Sichtgerät nach einem vorhergehenden Anspruch,
dadurch gekennzeichnet, daß der zweite Teil (10) der
augenseitigen, positiven optischen Wirkungsgruppe
als farbkorrigierte Linsengruppe ausgebildet ist.

Fig. 1

Fig. 2

Fig. 3

0181638

3/7

Fig. 4

2a

1a 1b 2b 3a,3b 5a,5b 4a,4b 8 7 10

9

11a,11b

4/7

0181638

Fig. 5

*Fig.6*

M 0.5 ZU 1

7/7

*Fig. 7*

10

F12  F13, F14  F15